Europäisches Patentamt

European Patent Office

Office européen des brevets

(11) Publication number: **0 536 289 B1**

## EUROPEAN PATENT SPECIFICATION

(45) Date of publication of patent specification: **26.04.95**  (51) Int. Cl.⁶: **C08J 5/04**

(21) Application number: **91912871.0**

(22) Date of filing: **21.06.91**

(86) International application number:
**PCT/US91/04428**

(87) International publication number:
**WO 92/00343 (09.01.92 92/02)**

(54) **REINFORCED FLEXIBLE COMPOSITE MATERIALS.**

(30) Priority: **29.06.90 US 546467**

(43) Date of publication of application:
**14.04.93 Bulletin 93/15**

(45) Publication of the grant of the patent:
**26.04.95 Bulletin 95/17**

(84) Designated Contracting States:
**DE FR GB IT SE**

(56) References cited:
**EP-A- 0 211 505**
**WO-A-90/06337**
**WO-A-90/13593**
**US-A- 4 680 220**
**US-A- 4 946 736**

**Orbit Search Service, File WPAT
90-310752/41, ANONYMOUS: "Materials and
processes for low di- electric constant in-
sulators - for advanced prin- ted wiring
boards, comprising thermoplastic resin and
fluoro-carbon reinforcement material etc",
RD-317038-A 90.09.10 (9041)**

(73) Proprietor: **W.L. GORE & ASSOCIATES, INC.**
**551 Paper Mill Road,**
**P.O. Box 9206**
**Newark,**
**Delaware 19714-9206 (US)**

(72) Inventor: **KNOX, John, B.**
**133 School Road**
**Wilmington, DE 19803 (US)**
Inventor: **CONNELLY, John, B.**
**61 Cree Terrace**
**Rising Sun, MD 21911 (US)**

(74) Representative: **McCallum, William Potter et al**
**Cruikshank & Fairweather**
**19 Royal Exchange Square**
**Glasgow G1 3AE**
**Scotland (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

**Description**

This invention is related to reinforced flexible composite materials.

More particularly, the invention relates to flexible polymeric material reinforced with woven, knitted, braided, or wound fabrics comprised of fibers of expanded porous polytetrafluoroethylene to produce reinforced flexible materials with unique physical properties.

## BACKGROUND OF THE INVENTION

The rubber and plastics industries for years have used reinforcing fabric members in conjunction with flexible polymers to produce reinforced flexible composite materials used to fabricate a variety of useful mechanical goods such as tires, hose, liners, diaphragms, seals, gaskets, protective fabrics, tapes, accumulators, airbags, fuel cells, fuel tanks, flexible couplings, medical tubing, structural bearings and so forth. The purpose of the reinforcing members in the reinforced flexible materials is to limit the deformation of the composite materials, to satisfy the requirements of the intended service, to strengthen the composite, to maintain dimensional stability, to absorb energy and to extend service life.

Over the years, improved reinforcing fabrics have evolved from cotton and progressed through the use of rayon, nylon, polyester, glass, steel, polyaramides and polytetrafluoroethylene (PTFE) fibers. These materials have been used in the form of individual fibers or cords and in the form of woven, knitted or braided fabrics depending on end use requirements. Each of these materials contributes unique attributes to the final composite structure and each suffers certain limitations in critical properties such as strength, elongation, stiffness, flexibility, fatigue resistance, creep resistance, and chemical and thermal stability.

A particular advance with the use of fabrics to reinforce composites was taught in U.S. Patent No. 2,772,444, to Burrows, et al., outlining the use of PTFE in oriented fiber form. Industry has investigated this material in composite structures. However, because of its low tensile strength, poor creep resistance and high cold flow, its use as reinforcement in flexible composites has been very limited.

U.S. Patent No. 3,513,064, to Westley, et al., discloses the use of PTFE fiber in conjunction with a fluoroelastomer and a fluoroplastic for use in protective clothing where the low physical properties of the fabric are adequate for the end-use. Other end uses are also mentioned but have limited utility because of the above cited deficiencies.

U.S. Patent No. 4,680,220 to Johnson utilizes expanded PTFE (ePTFE) filaments to produce fabrics impregnated with certain thermosetting resins to provide dielectric materials for use in rigid printed circuit boards.

U.S. Patent No. 4,946,736 to Sassa, teaches a laminate comprising adhered layers of polytetrafluoroethylene (PTFE) membrane, thermoplastic polymer and backing fabric of woven fibers of PTFE. The preferred membranes and fibers are of porous PTFE, more preferably of porous expanded PTFE (aPTFE). The laminate exhibits superior electromagnetic transmission characteristics and is used for enclosing and protecting radio antennas.

## SUMMARY OF THE INVENTION

According to one aspect of the present invention there is provided a composite material comprising at least one ply of:

(a) fabric comprised of expanded porous polytetrafluoroethylene fibres; and

(b) at least one flexible polymer having a flexural elastic modulus less than 1,400 MPa,

wherein the ratio by volume of flexible polymer to fabric is between 5-95% and 95-5% said composite material has (1) a modulus at 5% strain less than 170 MPa, and wherein (2) the total amount of work the composite material can withstand prior to failure is greater than 670 joules/cm, of fabric matrix (by volume).

According to another aspect of the present invention there is provided a composite material comprising a) one fabric comprised of expanded porous polytetrafluoroethylene fibre and at least one additional compatible fibre, and b) at least one flexible polymer having a flexural elastic modulus less than 1,400 MPa, said composite material having (1) a modulus at 5% strain less than 210 MPa, and wherein (2) the total amount of work the composite material can withstand prior to failure is greater than 450 J/cm of fabric matrix (by volume).

The invention is concerned with a reinforced flexible composite material of at least one ply of fabric made from or containing expanded porous PTFE fiber in combination with one or more polymers having a flexural elastic modulus less than 1,400 MPa, said composite material having a modulus at 5% strain less than 170 MPa and an "energy management" property determined through tensile testing, of greater than

2

670 joules/cm of fabric matrix (by volume).

Energy management is defined as the total amount of work a material can withstand prior to failure, normalized for the volume of fabric.

The energy management capabilities of the reinforced flexible composite materials of this invention are characterized by calculating the total area under the stress/strain curve produced in tensile testing, which results in greater than 670 J/cm. of fabric matrix (by volume).

These unique "energy management" characteristics are combined with the outstanding characteristics of ePTFE fibers, such as environmental stability (both thermal and chemical) and surface properties such as wear resistance, low friction and self lubricity, to provide reinforced flexible composite materials for a wide range of uses.

When compared to other reinforced composite materials, the inventive reinforced flexible composite material exhibits high energy management values, defined as the total amount of work a material can withstand prior to failure. The inventive reinforced flexible composite material exhibits toughness rather than brittleness thereby allowing further work to be introduced into the reinforced flexible composite material after its ultimate strength has been achieved.

The inventive reinforced flexible composite material's flexibility is demonstrated by the low stress levels at the associated strain levels exhibited by the reinforced flexible composite material during physical testing. The inventive reinforced flexible composite material also exhibits high tensile and burst strengths in physical tests. When compared to known reinforced composite materials, the inventive reinforced flexible composite material represents a unique combination of the mechanical attributes of toughness, flexibility, strength and enhanced energy management values.

## BRIEF DESCRIPTION OF DRAWINGS

Figure 1A is a stress/strain curve of a 6-ply material where each ply is a thermosetting fluoroelastomer reinforced with plain weave, square woven fabric of 200 denier (denier = a measure of fineness for yarn equal to the fineness of a yarn weighing 0.05g for each 450m of length or 1g for each 9000m) expanded PTFE (ePTFE) fiber, as produced in Example 1. It is representative of the composites of this invention.

Figure 1B is a stress/strain curve of a 6-ply material where each ply is the same fluoroelastomer as used in Figure 1A, but the reinforcing fabric is a plain weave, square woven fabric of 200 denier unexpanded PTFE fiber used for comparison purposes in Example 1.

Figure 1C is a stress/strain curve of a 6-ply material as described in Figures 1A and 1B except that the reinforcing fabric is a plain weave, square woven fabric of 200 denier glass fiber, used for comparison purposes in Example 1.

Figure 1D is a stress/strain curve of a 6-ply material as described in Figure 1A, 1B and 1C except that the reinforcing fabric is a plain weave, square woven fabric of 200 denier aramid fiber used for comparison purposes in Example 1.

Figure 2 plots the energy management values (based on tensile tests) found in Table 1C, column 11, against the thickness of the composite material found in Table 1A, column 1.

Figure 3 plots ball burst strength of reinforced composite materials found in Table 1C, column 13, against the thickness of the composite materials found in Table 1A, column 1.

Figure 4 shows a fabric for use in the invention having all expanded PTFE fibers.

Figure 5 shows a fabric for use in the invention having expanded PTFE fibers and quartz fibers.

Figure 6 shows a reinforced flexible composite material comprised of a thermosetting elastomer, a fabric of expanded PTFE and a thermoplastic.

Figure 7 shows a diaphragm fabricated of the reinforced composite material depicted in Figure 6.

## DETAILED DESCRIPTION OF DRAWINGS

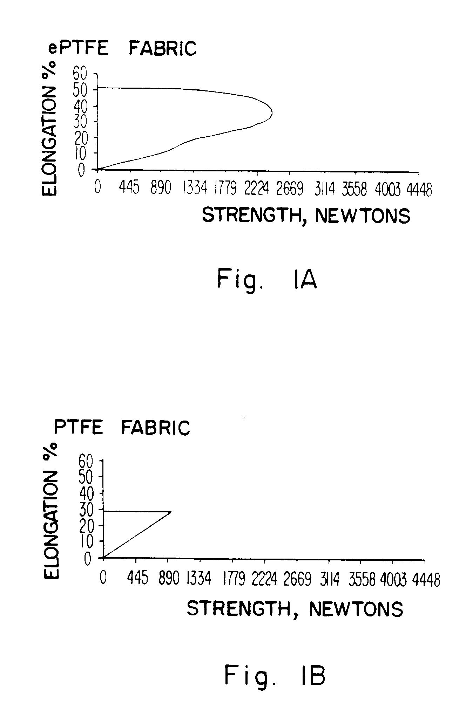

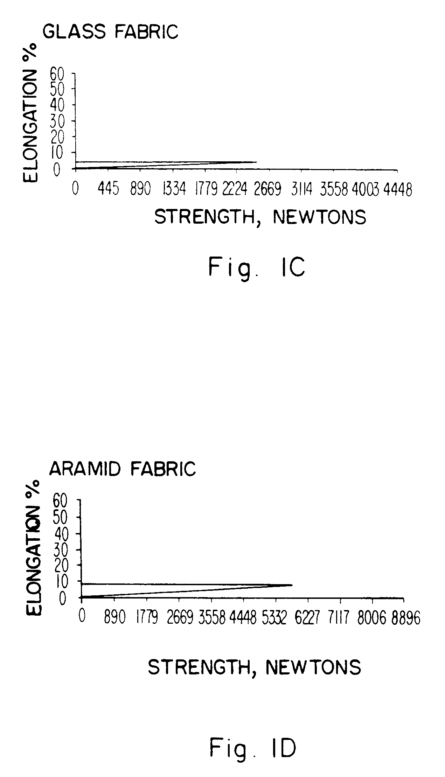

In Figures 1A, 1B, 1C and 1D, the stress/strain curves of representative 6 ply fabric reinforced composite materials produced in Example 1 are depicted.

Energy management capability of each of the four composite materials was determined by calculating the total area under the stress/strain curve in joules and normalizing the value for fabric matrix by volume. The ePTFE fabric reinforced flexible composite material (Fig. 1A) of this invention had an energy management value of 2200 J/cm. In contrast, unexpanded PTFE fabric reinforced composite material (Fig. 1B) had a value of only 400 J/cm. Glass fabric reinforced composite material (Fig. 1C) and aramid fabric reinforced composite material (Fig. 1D) had values of only 140 J/cm. and 560 J/cm. respectively. The increased area under the stress/strain curve of ePTFE fabric reinforced flexible composite material of this

EP 0 536 289 B1

invention in Figure 1A is a graphical representation of the increased energy management of flexible composite materials employing ePTFE fabrics as reinforcing material.

The stress/strain curve of ePTFE fabric reinforced flexible composite material depicted in Figure 1A also displays an additional advantage of the use of ePTFE as a fabric reinforcement; the toughness of the resulting composite material. This toughness allows the composite materials of this invention to continue to offer resistance to failure after ultimate strength of the composite has been attained. As can be seen in Figures 1B, 1C and 1D, the comparison composite materials depicted therein exhibit brittleness; whereby once the ultimate strength of the composite material has been attained, the composite material fails catastrophically.

Figures 1A and 1B show that fabric reinforced composite materials using reinforcing fabrics based on ePTFE and PTFE have lower stress levels at 5% strain than do composite materials of glass and aramid fabrics shown in Figures 1C and 1D respectively. The lower stress levels at low strain is described as "early modulus".

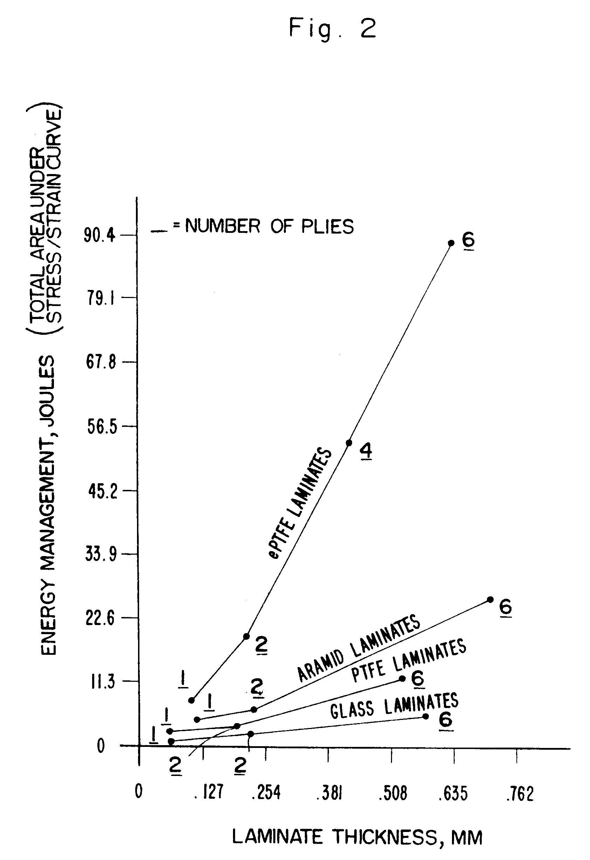

Figure 2 is a plot of the relationship between energy management of ePTFE and other comparison fabric reinforced flexible composite materials composed of 1, 2, 4 or 6 plies versus fabric matrix thickness of the composite material.

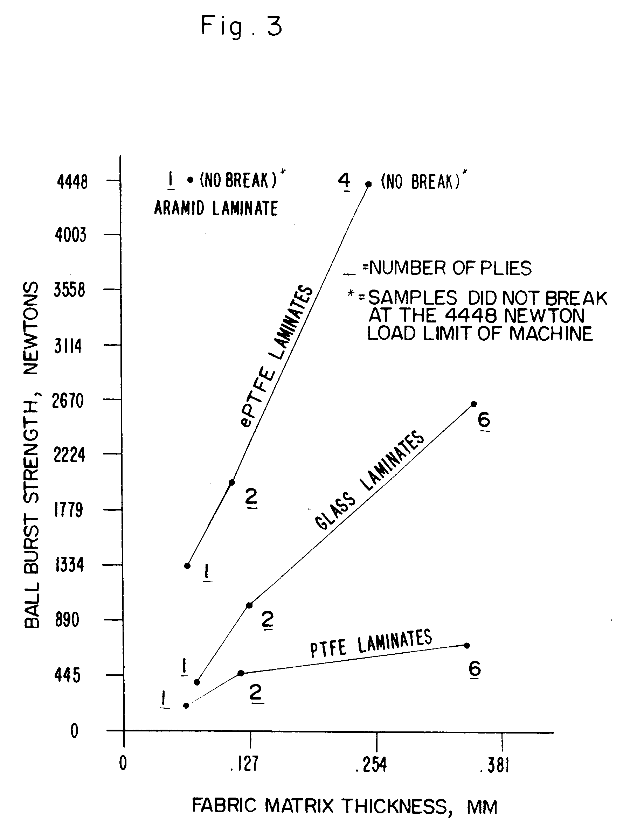

Figure 3 plots ball burst strength, which measures the strength of a material when a force is applied in the normal direction, in newtons (Table 1C, column 13) versus thickness of the laminate in mm., column 1. As shown, ePTFE fabric reinforced flexible composite materials of this invention are remarkably superior to comparison PTFE fabric reinforced composite materials. The six ply PTFE fabric reinforced composite material comparison sample failed abruptly at 740 N. of force whereas the four ply ePTFE fabric reinforced flexible composite material sample of this invention did not fail at 4450 N. force (the load limit of the machine).

Similar improvements for ePTFE fabric versus glass fabric reinforced composite materials are shown in Figure 3 for ball burst strength. Aramid fabric reinforced composite comparison materials exhibit high ball burst strength (in excess of the capability of the load cell in the physical testing apparatus), as expected for this fabric of ultra-high modulus and breaking strength but poor flexibility and elastic properties.

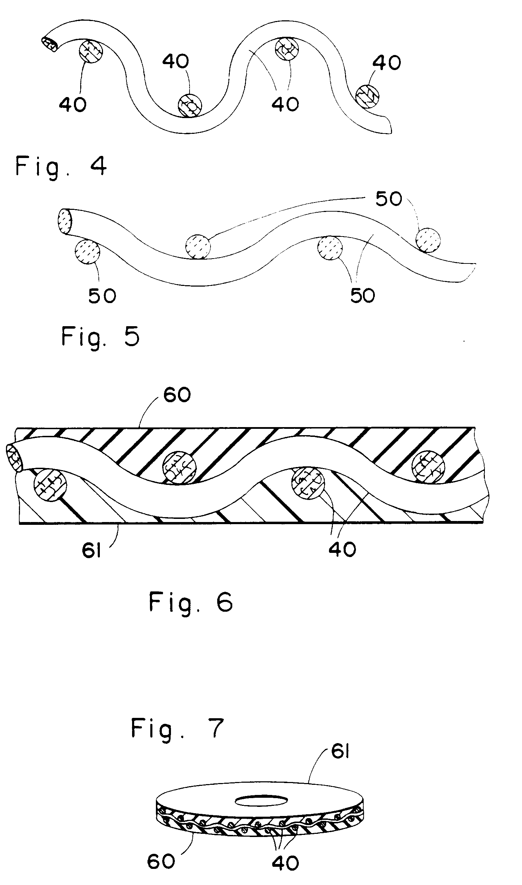

Figure 4 shows a portion of a woven fabric in which all fibers 40 are expanded PTFE fibers, and Figure 5 shows a portion of a fabric in which a portion of the fibers 40 are expanded PTFE and a portion are quartz fibers 50.

Figure 6 shows a reinforced flexible composite material of this invention comprised of a thermosetting elastomer 60, a fabric of expanded PTFE 40 and a thermoplastic 61.

Figure 7 shows a diaphragm fabricated of the reinforced composite material depicted in Figure 6. The top surface of the diaphragm is a thermoplastic 61. The bottom surface is a thermosetting elastomer 60. Between the thermoplastic 61 and the thermosetting elastomer 60, a fabric of expanded PTFE 40 is embedded.

## DETAILED DESCRIPTION OF THE INVENTION

This invention involves the use of fabrics (woven, knitted, braided or wound) of expanded porous PTFE (ePTFE) fiber, which may be treated with etchant, and combined with certain thermosetting or thermoplastic flexible polymeric materials to produce flexible products with unique properties. The ratio by volume of flexible polymer to fabric is between 5-95% and 95-5%.

U.S. Patent No. 3,953,566 and U.S. Patent No. 4,187,390 teach expanded PTFE (ePTFE) in porous form leading to a wide variety of useful fabricated articles such as films, tubes, rods and continuous filaments.

Filaments of porous ePTFE are prepared by the methods described in U.S. Patent 3,962,153 in different deniers and are subsequently constructed into fabrics using weaving, knitting, braiding and winding techniques. These fabrics may subsequently be treated with etchants, such as alkali naphthanates, or other surface modifiers, to improve adhesion to polymers.

Such fabrics are then combined with flexible polymers or combinations containing flexible polymers. Subsequently, such individual coated fabric layers (or plies) can be combined into multiple ply constructions; such constructions can be combined using plies based on other reinforcing fabrics. Single plies can be woven from ePTFE fiber combined with other fibers (such as quartz, glass, aramids or nylon).

One preferred embodiment of the invention is where the flexible polymer is a thermosetting elastomer selected from the class consisting of fluoroelastomers including those containing hydrogen and those not containing hydrogen, perfluoroelastomers, and fluoroelastomers containing silicone moieties, nitrile elastomers, acrylic elastomers, olefin diene elastomers, chlorosulfonated polyethylene elastomers, polychloroprene elastomers, butyl and halogenated butyl elastomers, styrene-butadiene elastomers, polydiene

4

elastomers and silicone elastomers. The thermosetting elastomers in the above-mentioned class have a flexural elastic modulus (ASTM D790-84a)of less than 1,400 MPa.

Another preferred embodiment of the invention is where the flexible polymer is a thermoplastic elastomer selected from the class consisting of copolyetherester elastomers, polyurethane elastomers, styrene polyolefin block copolymer elastomers, polyamide elastomers, ethylene copolymer elastomers, and thermoplastic elastomers produced by the process of dynamic vulcanization as described in USP 4,130, 535 to Coran, et al. wherein a blend of a curable elastomer and a plastic result in a thermoplastic elastomeric composition. The thermoplastic elastomers in the above-mentioned class have a flexural elastic modulus (ASTM D790-84a) of less than 1,400 MPa.

Another preferred embodiment of the invention is where the flexible polymer is a thermoplastic having a flexural elastic modulus (ASTM D790-84a) less than 1,400 MPa, and selected from the class consisting of fluorinated thermoplastics consisting of homopolymers and copolymers of tetrafluoroethylene, copolymers of vinylidine fluoride, copolymers of chlorotrifluoroethylene, polyolefins, and plasticized polyvinyl chlorides.

The fabric comprised of ePTFE fiber is laminated, coated or saturated with flexible polymers by a solution coating, melt coating, calendering, extruding, laminating, press molding, roto-molding, thermo-forming, or vacuum forming processes. The resulting composite forms an integral unit.

Final parts can be constructed by post-forming flexible reinforced composite materials comprised of single or multiple plies by pressure laminating, press molding, autoclave molding, roto-molding, hot roll lamination, vacuum forming or thermo-forming processes.

Final parts comprising the flexible reinforced composite material include tires, tubes, liners, molded diaphragms, bellows, seals, septa, gaskets, packings, coated fabrics, protective clothing, tapes, shock absorbers, accumulators, air bags, fuel cells, fuel tanks, flexible couplings, hose, medical tubing, expansion joints, structural bearings and belting.

The performance of these reinforced flexible composite materials can also be modified by the way in which braiding, weaving, knitting or winding is performed to construct the fabric.

## TEST METHODS

### Tensile Testing

The stress at break, strain at break, stress at 5% elongation modulus at 5% strain, ultimate strain, ultimate stress and energy management characteristics of the materials were determined using ASTM D 882-83 Method A. A constant rate-of-jaw separation type machine (Instron Testing Machine, Model 1122) equipped with a strip chart recorder was used.

Materials were cut using a die into 2.5 cm. x 15.2 cm. samples in both the warp and the fill directions. Alternatively, samples were cut using a die into a 15.2 cm. dog bone shape. Samples were not conditioned, but the testing was performed in a controlled room at a temperature of 21°C and a relative humidity of 65%.

The gauge length of the test specimen was 10.2 cm., and the strain rate employed was 25.4 cm./minute. The strip chart recorder was run at 127.0 cm./minute. All samples were tested to break if the load cell limit was not exceeded. If the load cell limit was exceeded, the test was aborted, and the value was stated as in excess of the load limit.

Stress/strain levels at "ultimate" and at "break" were recorded as well as stress at 5% strain. If the sample broke prior to 5% strain, the stress at break was listed, and the lack of a 5% strain value was noted.

The energy management of the material was obtained by calculating the total area under the stress/strain curve produced in this test. This value was normalized for fabric volume and was recorded as J/cm. of fabric thickness by volume.

Modulus at 5% strain of the material was calculated by determining the amount of stress at 5% strain for a material and dividing that value by the fabric matrix thickness.

### Force To Flex

The peak force required to flex a material through a defined bend was measured. The device used was a Thwing-Albert Handle-O-Meter, model 211-5. The Handle-O-Meter has a blade which forces a sample of material into a 0.64 cm. wide slot having parallel sides to a depth of 0.64 cm. The peak force required to achieve this deflection is reported in grams.

Material was die cut into 2.5 cm. x 7.6 cm. samples. Each material tested was cut into three warp samples and three fill samples. Prior to testing, the test pieces were allowed to condition in a controlled room at a temperature of 21°C and a relative humidity of 65%.

Each sample was tested across the 2.5 cm. dimension toward one end of the sample. After this test, the sample was inverted and the other end and opposite side of the sample was tested. This procedure permitted testing of areas that had not been previously subjected to flexing. The values obtained from a warp and a fill sample were paired. The addition of these four readings is total hand, which provides a measure of material flexibility.

**Tubing Burst Strength**

Burst strength of reinforced, tubular constructions were determined through the use of SAE J 343-C; SA 100R series Burst Test for Hydraulic Hose and Hydraulic Hose Assemblies. All samples were testing at ambient temperature to failure. Deformation of the sample prior to burst was noted as well as the area of failure.

**Ball Burst Strength**

The ball burst strength and the energy management characteristic of the materials was determined using FTM 5120. A constant rate-of-jaw separation type machine (Instron Testing Machine, Model 1122) equipped with a strip chart recorder was used to conduct these tests.

The testing machine was fitted with a 4450 N. load cell and was run in its compression mode. A ring clamp mechanism with an internal diameter of 4.45 cm. was used to securely hold the sample in place throughout the test. The ball defining the end of the plunger had a diameter of 2.54 cm. The relative motion of the ball was perpendicular to the plane of the ring clamp mechanism and through the center of the sample.

If a sample consisted of flat material, the sample was die cut into a 10.2 cm. x 10.2 cm. square. If the sample was a finished part such as a molded convoluted diaphram, the sample was of sufficient size to be securely clamped by the ring clamp mechanism. Samples were centered in the ring clamp mechanism, securely clamped and tested at a cross head speed of 25.4 cm./minute. Samples were not conditioned prior to testing.

The energy management of the material was obtained by calculating the total area under the curve recorded for the ball burst test. Like the energy management value obtained from the stress/strain curve, the energy management value obtained from the ball burst test was normalized for fabric volume and was recorded as J/cm. of fabric thickness by volume.

**Abrasion Testing**

The resistance of materials to abrasion was determined through the use of ASTM D 3884-80. A 1000 gm. weight was mounted on the testing apparatus to provide an increased load on the samples. H-18 abradant was used. Samples were tested with the fabric face exposed and without prior conditioning.

After every 300 cycles, the abrasion wheels were cleaned with a brush to remove abraded material. After every 1000 cycles or at the start of a sample, a new abrasive disc was placed in the testing apparatus. The sample thickness was periodically tested with a micrometer. When 0.005 cm. of surface reduction was measured, the test was terminated and the number of cycles was recorded.

**Flexural Elastic Modulus**

The flexural elastic modulus of the flexible polymer is determined by ASTM D790-84a; Test Methods for Flexural Properties of Unreinforced and Reinforced Plastics and Electrical Insulation Materials.

**EXAMPLES**

Example 1 and Comparison - Reinforced Flexible Composite Materials

Fabric woven from 200 denier ePTFE fiber, (plain weave, threads/2.5 cm.: W/F, 65/66) was etched by the following process. An alkali naphthanate etchant (Tetra-Etch® etchant obtained from W. L. Gore & Associates, Inc.) was applied to the fabric surface with a brush. The etchant was allowed to remain on the surface of the fabric for a short period of time. The fabric surface was then carefully washed with an excess amount of hot water to remove the etchant. The washed surface was wiped with an organic solvent (methyl ethyl ketone was used). When the organic solvent evaporated from the fabric, the fabric was placed in an 100°C oven for approximately 10 minutes to sublime the residual naphthanate.

The etched fabric was coated with a fluoroelastomer in a solvent solution (Viton® fluoroelastomer solution, PLV-2000 obtained from Pelmor Laboratories). The fluoroelastomer was cured with a ketimine curing agent (accelerator #4 obtained from Pelmor Laboratories). The fluoroelastomer solution was mixed with the ketimine curing agent at a ratio of 27 parts by weight of fluoroelastomer solution to one part by weight of curing agent. The fluoroelastomer coating was applied at a speed of 90 cm. per minute using a dip tank with a Meier rod, resulting in a coating 43% by volume fluoroelastomer.

For comparative purposes, other commerically available 200 denier fabrics of aramid yarn, (Kevlar® 29 Aramid yarn, style 005, plain weave, threads/2.5 cm.: W/F 50/51 available from E. I. duPont de Nemours & Co.); unexpanded polytetrafluoroethylene fibers, (Teflon® TFE fluorocarbon, plain weave, threads/2.5 cm.: W/F 51/51, available from E. I. duPont de Nemours & Co.); and glass fibers (1100 glass, style 125 plain weave, threads/2.5 cm.: W/F 58/47, available from J. P. Stevens) were coated with the fluoroelastomer using the same process to approximately the same volume percentages. The polytetrafluoroethylene fabric was etched using the previously described etching procedure prior to coating with the fluoroelastomer.

Several plies of these coated fabrics were subsequently hot press laminated and press cured 30 minutes at 150°C and 2070 KPa to provide reinforced composite materials containing 1, 2, 4, or 6 plies for subsequent physical testing. Physical testing of stress-strain properties was made and results are summarized in Table 1A, 1B and 1C.

TABLE 1A

| COLUMN | | | 1 | 2 | 3 | 4 | 5 |
|---|---|---|---|---|---|---|---|
| FABRIC | | PLIES | COMPOSITE THICKNESS mm | FABRIC MATRIX FRACTION (BY VOLUME) | FABRIC MATRIX THICKNESS (BY VOLUME) mm | STRESS @ 5% ELONGATION NEWTONS | STRESS @ 5% ELONGATION FABRIC MATRIX BASIS (BY VOLUME) M Pa |
| Example 200 DENIER ePTFE THREADS/2.54 cm: W/F 65/66 PLAIN WEAVE | | 1 | .114 | .57 | .0653 | 133 | 80.4 |
| | | 2 | .213 | : | .121 | 267 | 86.8 |
| | | 4 | .432 | : | .246 | 400 | 64.0 |
| | | 6 | .635 | : | .362 | 534 | 58.0 |
| Comparison 200 DENIER PTFE THREADS/2.54 cm: W/F 51/51 PLAIN WEAVE | | 1 | .104 | .61 | .0635 | 26.7 | 16.5 |
| | | 2 | .193 | : | .118 | 71 | 23.8 |
| | | 6 | .536 | : | .328 | 214 | 25.6 |
| Comparison 200 DENIER ARAMID STYLE 005, PLAIN WEAVE THREADS/2.54 cm: W/F 50/51 | | 1 | .135 | .64 | .086 | 1023 | 467 |
| | | 2 | .236 | : | .151 | 1957 | 510 |
| | | 6 | .686 | : | .439 | 4537 | 406 |
| Comparison 200 DENIER GLASS THREADS/2.54 cm: W/F 58/47 PLAIN WEAVE | | 1 | .119 | .60 | .071 | (429) | 237 |
| | | 2 | .211 | : | .127 | (907) | 281 |
| | | 6 | .589 | : | .356 | (2389) | 264 |

7

TABLE
1B

| COLUMN | | 6 | 7 | 8 | 9 | 10 |
|---|---|---|---|---|---|---|
| | | ELONGATION @ ULTIMATE | | ULTIMATE | ULTIMATE TENSILE STRENGTH | |
| FABRIC | PLIES | STRENGTH | cm | STRENGTH, | TOTAL | FABRIC |
| | | | (PER 10.16 | NEWTONS | COMPOSITE | MATRIX BASIS |
| | | | cm GAGE | | BASIS, M Pa | (BY VOLUME), M Pa |
| | | % | LENGTH) | | | |
| **Example** | | | | | | |
| 200 DENIER ePTFE THREADS/2.54 cm: W/F,65/66 PLAIN WEAVE | 1 | 19.4 | 1.97 | 489 | 168.8 | 294.9 |
| | 2 | 24.2 | 2.46 | 841 | 156.9 | 273.6 |
| | 4 | 31.4 | 3.19 | 1672 | 152.4 | 267.3 |
| | 6 | 31.2 | 3.17 | 2438 | 152.2 | 265.0 |
| **Comparison** | | | | | | |
| 200 DENIER PTFE THREADS/2.54 cm: W/F, 51/51 PLAIN WEAVE | 1 | 23.6 | 2.40 | 125 | 47.6 | 77.7 |
| | 2 | 20.0 | 2.03 | 249 | 51.0 | 83.5 |
| | 6 | 27.4 | 2.77 | 881 | 65.0 | 105.8 |
| **Comparison** | | | | | | |
| 200 DENIER ARAMID STYLE 005, PLAIN WEAVE THREADS/2.54 cm: W/F, 50/51 | 1 | 6.1 | .610 | 1543 | 451.1 | 705.3 |
| | 2 | 6.5 | .660 | 2282 | 380.1 | 594.0 |
| | 6 | 8.3 | .843 | 6476 | 371.6 | 460.4 |
| **Comparison** | | | | | | |
| 200 DENIER GLASS THREADS/2.54 cm:W/F, 58/47 PLAIN WEAVE | 1 | 2.7 | .274 | 427 | 141.5 | 237.5 |
| | 2 | 3.8 | .386 | 907 | 169.3 | 281.1 |
| | 6 | 4.2 | .427 | 2389 | 159.5 | 264.3 |

TABLE 1C

| FABRIC | PLIES | Column 11 — ENERGY MANAGEMENT (TOTAL AREA UNDER STRESS/STRAIN CURVE) JOULES | Column 12 — J/cm OF MATRIX (BY VOLUME) | Column 13 — BALL BURST STRENGTH, NEWTONS | Column 14 — BALL BURST ENERGY MANAGEMENT (TOTAL AREA UNDER STRESS/STRAIN CURVE) JOULES | Column 15 — J/cm OF MATRIX |
|---|---|---|---|---|---|---|
| Example 200 DENIER ePTFE THREADS/2.54 cm: W/F, 65/66 PLAIN WEAVE | 1 | 8.20 | 1256 | 1134 | 6.34 | 971 |
| | 2 | 20.70 | 1710 | 1997 | 14.20 | 1175 |
| | 4 | 55.49 | 2255 | >4448 (No Break) | - | - |
| | 6 | 88.09 | 2435 | >4488 (No Break) | - | - |
| Comparison 200 DENIER PTFE THREADS/2.54 cm: W/F, 51/51 PLAIN WEAVE | 1 | 1.51 | 238 | 245 | 1.75 | 277 |
| | 2 | 2.53 | 216 | 476 | 2.90 | 246 |
| | 6 | 12.19 | 372 | 738 | 4.88 | 149 |
| Comparison 200 DENIER ARAMID STYLE 005, PLAIN WEAVE THREADS/2.54 cm: W/F, 50/51 | 1 | 4.70 | 546 | >4448 (No Break) | - | - |
| | 2 | 7.54 | 499 | >4448 (No Break) | - | - |
| | 6 | 27.71 | 622 | >4448 | - | - |
| Comparison 200 DENIER GLASS THREADS/2.54 cm: W/F, 69/67 PLAIN WEAVE | 1 | .99 | 83 | 427 | .86 | 121 |
| | 2 | 1.70 | 138 | 992 | 3.03 | 238 |
| | 6 | 5.10 | 143 | 2651 | 16.8 | 474 |

Table 1A summarizes sample thickness, fabric volumetric fraction of the composite (the remainder being the fluoroelastomer polymer) and stress at 5% strain data.

Table 1B summarizes elongation data at ultimate strength both as an absolute percentage and as cm. of the original, unelongated 10.1 cm. gauge length. Columns 8, 9 and 10 show ultimate composite strength in newtons and as MPa, i.e. tensile strength.

Table 1C summarizes in columns 11 and 12 "tensile" energy management properties as joules and J/cm. per 2.54 cm (inch) of fabric matrix.

Table 1C summarizes ball burst data in terms of burst strengh (column 13), "ball burst" energy management in joules (column 14) and in J/cm. of fabric matrix (column 15).

The series of reinforced flexible composite materials containing ePTFE fabrics had greater ball burst strength and energy management values than reinforced composite materials containing PTFE and glass fabrics. The aramid fabric reinforced composite materials had higher ball burst strength values which was the expected result for this fabric of high modulus and breaking strength (but as earlier defined, poor flexibility and elastic properties).

To further illustrate the energy management characteristics of reinforced flexible composite materials of ePTFE fabric, Figures 2 and 3 are shown and are based on the same samples and data from Table 1.

Both the ePTFE reinforced composite materials of this invention and the unexpanded PTFE comparison composite have more than enough elongation to allow structures made from them to be used as elastic, flexible composites. Conversely, reinforced composite comparison materials of glass and aramids do not have sufficient elongation to be used in truly flexible applications.

The useful elastic characteristic of composites is defined by the stress levels associated with low levels of elongation in the range of 1-10% strain. This is often described as "early" modulus. To be truly flexible, a reinforced composite material must have the "elasticity" to be elongated from 1-10% at low applied stress levels.

The flexibility of composites is also determined by the force needed to flex samples of composites. The force to flex composites containing one ply of various 200 denier is found in Table 2.

The "useful elastic" properties of truly flexible reinforced composite materials are defined by their low "early" modulus and flexibility. The performance, longevity and safety of flexible reinforced composite materials are determined by their "energy management" characteristics, which is the total amount of work that a flexible composite may withstand prior to failure. The latter includes the amount of work that a reinforced composite material may withstand after ultimate strength of the composite has been reached.

TABLE 2

|  | Force to Flex |
|---|---|
| ePTFE Fabric | 41 grams |
| PTFE Fabric | 34 grams |
| aramid Fabric | 353 grams |
| glass Fabric | 505 grams |

These data demonstrate the high degree of flexibility found with both ePTFE and PTFE fabrics, in contrast to the stiff fabrics of aramid and glass.

Figure 2 plots energy management data for the series of 1, 2, 4 and 6 ply reinforced flexible composite materials in joules (Table 1C, column 11) versus thickness of the reinforced flexible composite materials in mm. (Table 1A, column 3). Similarly, Figure 3 plots ball burst data.

Additional examples of reinforced flexible composite materials were produced by the previously described process. These additional examples contained fabric produced from either 50 or 400 denier ePTFE fibers. The results of the testing performed on these reinforced flexible composite materials are found in Tables 3A, 3B and 3C.

TABLE
3A

| | COLUMN | | 1 | 2 | 3 | 4 | 5 |
|---|---|---|---|---|---|---|---|
| | | | | | | STRESS @ 5% ELONGATION | |
| | FABRIC | PLIES | COMPOSITE THICKNESS, mm | FABRIC MATRIX FRACTION (BY VOLUME) | FABRIC MATRIX THICKNESS (BY VOLUME), mm | NEWTONS | FABRIC MATRIX BASIS (BY VOLUME), M Pa |
| Example | 50 DENIER ePTFE THREADS/2.54 cm:W/F,129/112 PLAIN WEAVE | 1 | .056 | .72 | .040 | 98 | 95.9 |
| | | 2 | .081 | " | .058 | 187 | 125.8 |
| | | 4 | .163 | " | .117 | 356 | 119.6 |
| Example | 200 DENIER ePTFE THREADS/2.54 cm: W/F,65/66 PLAIN WEAVE | 1 | .114 | .57 | .065 | 133 | 80.4 |
| | | 2 | .213 | " | .121 | 267 | 86.8 |
| | | 4 | .432 | " | .177 | 400 | 64.0 |
| | | 6 | .635 | " | .362 | 534 | 58.0 |
| Example | 400 DENIER ePTFE THREADS/2.54 cm: W/F, 52/52 PLAIN WEAVE | 1 | .173 | .65 | .113 | 267 | 93.1 |
| | | 2 | .325 | " | .212 | 356 | 65.9 |
| | | 4 | .643 | " | .419 | 578 | 54.3 |
| | | 6 | .940 | " | .615 | 712 | 45.5 |

EP 0 536 289 B1

TABLE
3B

| COLUMN | | 6 | 7 | 8 | 9 | 10 |
|---|---|---|---|---|---|---|
| | | ELONGATION @ ULTIMATE | | | ULTIMATE TENSILE STRENGTH | |
| FABRIC | PLIES | STRENGTH | cm | ULTIMATE | TOTAL | FABRIC |
| | | | (per 10.16 | STRENGTH, | COMPOSITE | MATRIX BASIS |
| | | | cm GAGE | NEWTONS | BASIS, M Pa | (BY VOLUME), M Pa |
| | | % | LENGTH) | | | |
| Example | | | | | | |
| 50 DENIER ePTFE | 1 | 18.3 | 1.86 | 214 | 150.3 | 209.3 |
| THREADS/2.54 cm:W/F,129/112 | | | | | | |
| PLAIN WEAVE | 2 | 16.7 | 1.70 | 431 | 208.8 | 290.6 |
| | 4 | 26.6 | 2.70 | 725 | 175.5 | 243.6 |
| Example | | | | | | |
| 200 DENIER ePTFE | 1 | 19.4 | 1.97 | 489 | 168.8 | 294.9 |
| THREADS/2.54 cm: W/F,65/66 | | | | | | |
| PLAIN WEAVE | 2 | 24.2 | 2.46 | 841 | 156.9 | 273.6 |
| | 4 | 31.4 | 3.19 | 1672 | 152.4 | 267.3 |
| | 6 | 31.2 | 3.17 | 2438 | 152.2 | 265.0 |
| Example | | | | | | |
| 400 DENIER ePTFE | 1 | 19.7 | 2.00 | 734 | 167.2 | 256.0 |
| THREADS/2.54 cm: W/F, 52/52 | | | | | | |
| PLAIN WEAVE | 2 | 30.0 | 3.05 | 1290 | 156.1 | 239.0 |
| | 4 | 35.8 | 3.64 | 2482 | 152.0 | 233.0 |
| | 6 | 35.8 | 3.94 | 3407 | 142.6 | 218.1 |

12

TABLE 3C

| COLUMN FABRIC | PLIES | 11 ENERGY MANAGEMENT (TOTAL AREA UNDER STRESS/STRAIN CURVE) JOULES | 12 J/cm OF MATRIX (BY VOLUME) | 13 BALL BURST STRENGTH, NEWTONS | 14 BALL BURST ENERGY MANAGEMENT (TOTAL AREA UNDER STRESS/STRAIN CURVE) JOULES | 15 J/cm OF MATRIX (BY VOLUME) |
|---|---|---|---|---|---|---|
| Example 1 50 DENIER ePTFE THREADS/2.54 cm: W/F,129/112 PLAIN WEAVE | 1 | 3.57 | 891 | 458 | 3.73 | 928 |
|  | 2 | 5.64 | 965 | 921 | 7.02 | 1202 |
|  | 4 | 21.16 | 1808 | 1801 | 15.56 | 1329 |
| Example 2 200 DENIER ePTFE THREADS/2.54 cm: W/F,65/66 PLAIN WEAVE | 1 | 8.20 | 1256 | 1134 | 6.34 | 971 |
|  | 2 | 20.68 | 1710 | 1997 | 14.20 | 1175 |
|  | 4 | 55.46 | 2255 | >4448 (No Break) | - | - |
|  | 6 | 88.09 | 2435 | >4448 (No Break) | - | - |
| Example 3 400 DENIER ePTFE THREADS/2.54 cm/: W/F, 52/52 PLAIN WEAVE | 1 | 18.36 | 1629 | 1672 | 11.90 | 1055 |
|  | 2 | 36.57 | 1723 | 3265 | 29.85 | 1407 |
|  | 4 | 97.07 | 2317 | >4448 (No Break) |  |  |
|  | 6 | 144.11 | 2350 | >4448 (No Break) |  |  |

The reinforced flexible composite material containing fabric constructed of 400 denier ePTFE fiber exhibited greater energy management properties than similarly constructed reinforced flexible composite material containing fabric constructed of 200 denier ePTFE fibers previously described. The difference between these two materials remains even when the data are normalized to a unit volumetric fabric matrix basis (Table 2C, column 12). The remaining difference is explained by the smaller ratio of surface area to volume of fiber as the denier of the fiber is increased. This increase in volume with respect to surface area reduces failures due to surface imperfections of the fibers.

The reinforced flexible composite material containing fabric constructed of 50 denier ePTFE fibers exhibit suppleness, flexibility as well as high strength and energy management properties. Such attributes would be of advantage in the fabrication of industrial diaphragms from this reinforced flexible composite material.

These data are based on plain weave, square woven fabrics combined with flexible polymers to produce reinforced flexible composite materials whose mechnical functionality is determined by the mechanical properties of the fabric matrix. Obviously, if loosely woven fabrics of the same fiber types in the above examples were used, those properties related to elongation (elongation stress at 5% strain and energy management) would be considerably different.

13

Example 2 - Architectural Reinforced Flexible Composite Materials

Reinforced flexible composite materials comprised of 1200 denier plain weave woven fabrics of ePTFE of this invention and unexpanded PTFE comparison material were compared. Calendered sheets of a 0.64 mm. thick thermosetting elastomer, chlorosulfonated polyethylene elastomer (Hypalon® available from E. I. duPont de Nemours & Co.), were laminated to both sides of these fabrics through the use of a flat bed platten press with a lamination cycle of five minutes at a temperature of 121°C and an applied pressure of 690 kPa.

The physical strength characteristics of the two reinforced flexible composite materials using a cross-head speed of 50.8 cm./minute, are summarized in Table 4.

TABLE 4

| (Tensile) | Energy Management (Ball Burst) | Energy Management |
|---|---|---|
| ePTFE Reinforced Flexible Composite Material of this invention | 903 J/cm. | 2,020 J/cm. |
| PTFE Reinforced Flexible Composite Comparison Material | 343 J/cm. | 650 J/cm. |

The advantages of the ePTFE fabric for reinforcing chlorosulfonated polyethylene elastomer and other flexible polymers are of considerable value in coated fabrics used for architectural applications where high strength, attractive colors, resistance to impact damage and exceptional outdoor longevity are prerequisites for flexible structures such as geodesic buildings, one-ply roofing and outdoor awnings.

Example 3 - Chemical Pump Diaphragms

Diaphragm pumps for use in pumping hazardous chemicals are presently fitted with two diaphragms; one diaphragm comprised of a fluorocarbon resin to resist the disintegrating effects of the hazardous chemicals, and a second diaphragm comprised of fabric-reinforced elastomer to withstand the mechanical, pneumatic or hydraulic forces driving the pump.

To evaluate "single" diaphragm candidates to replace "double" diaphragms, three-component reinforced flexible composite materials were fabricated. For comparative purposes, fabrics of 200 denier ePTFE and PTFE were etched using the process described in Example 1. The etched fabrics were separately laminated to 0.13 mm. of fluorinated ethylene propylene copolymer film in a vacuum press at 327°C for 10 minutes at 1,034 kPa of applied pressure. The fabric side of these laminates were etched using the etching process described in Example 1 and subsequently were laminated to 0.76 mm. of fluoroelastomer rubber (Eagle Elastomer, number EE-4515) in a press at 177°C for 30 minutes at 1,034 kPa applied pressure.

The physical characteristics of the two reinforced flexible composite materials, using a cross-head speed of 50.8 cm./minute, are shown in Table 5.

TABLE 5

| | Energy Management (Tensile) | Energy Management (Ball Burst) |
|---|---|---|
| FEP/ePTFE/fluoroelastomer rubber composite of this invention | 2,710 J/cm. | 3,340 J/cm. |
| FEP/PTFE/fluoroelastomer rubber comparison composite | 467 J/cm. | 1,100 J/cm. |

The thermal stability and high temperature strength of ePTFE fabric enables the high temperature lamination of fluorocarbon plastic films to it and concurrent or subsequent vulcanization of rubber to the other side. (Additionally, thermal properties of -212°C to + 288°C are especially valuable in service as is the chemical resistance of the fluorocarbon components.)

Example 4 - Fuel Pump Diaphragms

Single ply 100 denier fabrics of ePTFE and PTFE were etched using the process described in Example 1 . The etched fabrics were placed in a 7.6 cm. O.D. convoluted diaphragm mold with a 0.25 mm. sheet of nitrile rubber (VT 455-1 obtained from Akron Rubber Development). The molds were placed in a hydraulic press for 15 minutes at 160°C at a pressure of 2,070 kPa.

The finished convoluted diaphragms were tested, using a cross-head speed of 50.8 cm./minute, for ball burst strength. The results of these tests are found on Table 6. Due to the irregular surface of the convoluted diaphragms, accurate measurement of the elongation at break could not be obtained. Without an accurate measurement of elongation, energy management values could not be calculated.

TABLE 6

|  | Ball Burst Strength (newtons) |
|---|---|
| ePTFE/nitrile Composite 7.6 cm. O.D. Convoluted Diaphragm of this invention | 1268 |
| PTFE/nitrile Composite 7.6 cm. O.D. Convoluted comparisons Diaphragm | 338 |

The convoluted diaphragms fabricated from ePTFE/nitrile reinforced flexible composite material have the necessary chemical resistance to find utility in fuel pumps where the diaphragms must resist combinations of regular fuels and additives including ethanol, methanol, ethers, peroxides, and other corrosive oxidative by-products. While both the PTFE and ePTFE reinforced flexible composite materials have sufficient chemical resistance to these fuel additives, the ePTFE/nitrile reinforced flexible composite material has the physical strength and energy management required for the application.

Example 5 - Low Surface Friction, Flexible Composites

A single ply of 100 denier fabrics of ePTFE and PTFE were etched using the process described in Example 1 . The etched fabrics were laminated to 0.13 mm. films of a polyester elastomer (Hytrel® 7246 available from E. I. duPont de Nemours & Co.) in a vacuum press at 229°C for 5 minutes at 1034 kPa pressure. Care was taken to limit the penetration of the polyester elastomer into the etched fabrics so that one face of the fabric remained exposed.

Abrasion testing was performed on the two reinforced flexible composite material samples. The samples were placed in the testing apparatus to permit the exposed fabric face of the reinforced flexible composite material to be abraded. When 0.005 cm. of reduction was measured in the sample, the test was terminated. Results are found in Table 7.

TABLE 7

|  | Cycles |
|---|---|
| ePTFE Reinforced Flexible Composite Material of this invention | 2266 |
| PTFE Reinforced Flexible Composite Comparison Material | 750 |

For many dynamic sealing applications where fabric reinforced flexible composite materials are used such as rubber bushings, shaft seals, packings and the like, the environmental and low-surface friction characteristics of PTFE fabrics are highly desired. The superior surface wear resistance of the ePTFE fabric should provide increased utility with the use of ePTFE fabrics over PTFE fabrics in these applications.

Example 6 - Hybrid Fabric Reinforced Flexible Composite Materials

To determine the effect of fabrics with a mixture of ePTFE fibers and a second fiber, three fabrics were compared. The first fabric was a square woven 100 denier ePTFE fabric. The second fabric was co-woven of 100 denier ePTFE fiber and quartz fiber (525 style quartz fiber obtained from J. P. Stevens obtained from Fabric Development). This hybrid fabric consisted of a warp of 75 fibers per 2.5 cm. of which 30 fibers were 525 quartz and 45 were 100 denier ePTFE, and a fill of 60 fibers per 2.5 cm. of which 24 fibers were 525 quartz and 36 were 100 denier ePTFE. A third fabric was a plain weave of quartz fabric with 51 fibers in the warp and 52 fibers in the fill (525 style quartz fiber fabric obtained from J. P. Stevens).

The first two fabrics were etched using the etching process described in Example 1. The fabrics were then coated using the same process described in Example 1.

The results of the physical testing of these reinforced flexible composite materials, using a cross-head speed of 50.8 cm./ minutes, are found in Table 8.

TABLE 8

|  | Modulus @ 5% Strain | Energy Management (Tensile) | Energy Management (Ball Burst) |
| --- | --- | --- | --- |
| ePTFE Reinforced Flexible Composite Material of this invention | 86 MPa | 854 J/cm. | 631 J/cm. |
| ePTFE/Quartz Reinforced Composite Material of this invention | 193 MPa | 556 J/cm. | 1680 J/cm. |
| Quartz Reinforced Composite Comparison Material | 253 MPa | 218 J/cm. | 507 J/cm. |

The results demonstrate the performance of the reinforced flexible composite material can be tailored through the use of fabrics that contain ePTFE fibers along with other fibers. The benefits of the use of ePTFE fibers are increased energy management and ball burst strength.

Example 7 - Braided, Tubular Hose Composites

Synthetic fabric reinforcement is used in the manufacture of non-metallic hydraulic or pneumatic hose since high pressure ratings of the hose can be obtained without the use of metal braid which contributes inflexibility, conductivity and weight to the hose.

400 denier fibers of ePTFE or PTFE were braided over 0.64 cm. I.D. x 0.95 cm. O.D. cured fluoroelastomer tubes (Viton® fluoroelastomer tubing available from Eagle Elastomer) using a 36 carrier New England Butt Braider. A second ply of braid was placed over the first by repeating the braiding step.

The braided fabric tubes were then etched using the etching process described in Example 1. The braided fabric tubes were given two dip coats of the fluoroelastomer solution described in Example 1 and post-cured in an oven for 16 hours at 232°C to cure the fluoroelastomer coating.

The completed reinforced flexible composite material hoses were coupled and the tubing burst strengths were determined. The results are found in Table 9.

TABLE 9

|  | Burst Pressure For Coupled Hose in bar (psi) |
| --- | --- |
| ePTFE Tubular Reinforced Composite Material Hose of this invention | 117.21 (1700) |
| PTFE Tubular Reinforced Composite Material Comparison Hose | 41.37 (600) |

The three-fold improvement in pressure burst of the ePTFE fiber tubular reinforced composite material hose, when compared with the PTFE tubular reinforced composite material hose, illustrates the superior energy management characteristics of ePTFE tubular reinforced composite materials. The inertness of PTFE has long been desired for hose reinforcement not only for the obvious values of chemical and thermal resistance to the contained fluids and surrounding environment, but also to resist the long term degradative effects on fabric reinforcement of chemicals used in rubber hose components.

In addition to higher burst-pressure strength, ePTFE fiber braids can be expected to improve the hoses' resistance to abrupt, catastrophic failure which can result in the violent spraying of corrosive, hot chemicals in the work area and/or mechanical whipage of the hose should the hose completely break free from the coupling or break anywhere along its length.

Example 8 - Heavy Weight Fabrics

To illustrate the effect of fabric weight on flexible reinforced composite materials, two 400 denier ePTFE fabrics were obtained. One fabric was a "normal" 400 denier fabric (plain weave, threads/2.5 cm.: W/F, 52/52) as described in Example 1. The second fabric used the same 400 denier fiber but with a higher thread count (plain weave, threads/2.5 cm.: W/F, 78/72).

The fabrics were etched using the etching process described in Example 1. The etched fabrics were subsequently coated with the fluoroelastomer solution and cured following the steps described in Example 1.

The results of the physical testing of these reinforced flexible composite materials, using a cross-head speed of 50.8 cm./minute, are found in Table 10.

TABLE 10

| | Joules | Ball Burst Stength |
|---|---|---|
| 400 Denier W/F, 52/52 Fabric Composite Material of this Invention | 19.3 joules | 1670 newtons |
| 400 Denier W/F, 78/72 Fabric Composite Comparison Material | 31.2 joules | 2750 newtons |

This example demonstrates the greater amount of work and ball burst strength a reinforced flexible composite material withstands when comprised of a greater amount of ePTFE fabric. If the data are normalized for fabric volume, the energy management values of the two samples would be comparable.

The above examples are offered to illustrate the principles of reinforcing flexible composite materials with ePTFE fabrics. While the examples offered show the unique characteristics of reinforced flexible composite materials produced from the combination of ePTFE fabrics and thermosetting elastomers, thermoplastic elastomers and flexible plastics, it is not the intention to limit the invention to the specific polymers or types of end products listed but rather to include all broad classes of flexible polymers that, when combined with ePTFE fabrics, result in flexible reinforced composite materials with enhanced energy management values, environmental stability and surface properities.

Whether woven, knitted or braided fabrics are considered, comparisons within this invention must be based on tightly constructed fabric matrixes so that, at initial stress, no free elongation occurs in the flexible polymer prior to engagement of the fabric matrix.

## Claims

1. A composite material comprising at least one ply of:
   (a) fabric comprised of expanded porous polytetrafluoroethylene fibres; and
   (b) at least one flexible polymer having a flexural elastic modulus less than 1,400 MPa,
   wherein the ratio by volume of flexible polymer to fabric is between 5-95% and 95-5% said composite material has (1) a modulus at 5% strain less than 170 MPa, and wherein (2) the total amount of work the composite material can withstand prior to failure is greater than 670 joules/cm. of fabric matrix (by volume).

2. A composite material as claimed in Claim 1 where the flexible polymer is a thermosetting elastomer.

3. A composite material as claimed in Claim 1 where the flexible polymer is a thermoplastic elastomer.

4. A composite material as claimed in Claim 1 where the flexible polymer is a thermoplastic polymer.

5. The composite material as claimed in any preceding claim, wherein the fabric is selected from woven, knitted, braided or wound fabrics.

6. A composite material as claimed in any preceding claim, comprising one to four layers of said composite material and wherein the fabric is 50 denier square-woven fabric.

7. A composite material as claimed in any of Claims 1 to 5, comprising one to six layers of said composite material and wherein the fabric is 200 denier square woven fabric.

8. A composite material as claimed in any of Claims 1 to 5, comprising one to six layers of said composite material and wherein the fabric is 400 denier square woven fabric.

9. A composite material as claimed in any of Claims 1 to 5, wherein the fabric is 1200 denier square woven fabric.

10. A composite material comprising a) one fabric comprised of expanded porous polytetrafluoroethylene fibre and at least one additional compatible fibre, and b) at least one flexible polymer having a flexural elastic modulus less than 1,400 MPa, said composite material having (1) a modulus at 5% strain less than 210 MPa, and wherein (2) the total amount of work the composite material can withstand prior to failure is greater than 450 J/cm of fabric matrix (by volume).

11. A composite material as claimed in any preceding claim, in which the material is a diaphragm.

12. A process for making the composite material of Claim 1 wherein the composite structure is prepared by combining the fabric and the flexible polymer.

13. A process as claimed in Claim 12 wherein the composite structure is prepared by combining the fabric and the flexible polymer by a step selected from pressure laminating, press moulding, auto-clave moulding, roto-moulding, hot roll laminating or vacuum forming.

**Patentansprüche**

1. Ein Kompositwerkstoff mit wenigstens einer Schicht aus:
   (a) einer Ware bestehend aus Fasern aus expandiertem porösen Polytetrafluorethylen; und
   (b) wenigstens einem flexiblen Polymer mit einem Biegeelastizitätsmodul geringer als 1400 MPa,
   bei welchem das Volumenverhältnis des flexiblen Polymers zu der Ware zwischen 5 bis 95 % und 95 bis 5 % liegt, wobei (1) der genannte Kompositwerkstoff bei 5 % Reckung einen Modul von weniger als 170 MPa aufweist, und bei welchem (2) die Gesamtverformungsarbeit, welche der Kompositwerkstoff vor einem Bruch aushalten kann, größer ist als 670 joules/cm der Waren-Matrix (auf das Volumen bezogen).

2. Fin Kompositwerkstoff wie in Anspruch 1 beansprucht, bei welchem das flexible Polymer ein in Wärme aushärtendes Elastomer ist.

3. Ein Kompositwerkstoff, wie in Anspruch 1 beansprucht, bei welchem das flexible Polymer ein thermoplastisches Elastomer ist.

4. Ein Kompositwerkstoff, wie in Anspruch 1 beansprucht, bei welchem das flexible Polymer ein thermoplastisches Polymer ist.

5. Der Kompositwerkstoff, wie in einem der vorhergehenden Ansprüche beansprucht, bei welchem die Ware aus gewebten, gewirkten. geflochtenen oder gezwirnten Textilerzeugnissen ausgewählt ist.

6. Ein Kompositwerkstoff, wie in einem der vorhergehenden Ansprüche beansprucht, welcher eine bis vier Lagen des genannten Kompositwerkstoffs aufweist und bei welchem die Ware ein Quadrat-Gewebe mit 50 Denier ist.

7. Ein Kompositwerkstoff, wie in einem der Ansprüche 1 bis 5 beansprucht, welcher eine bis sechs Lagen des genannten Kompositwerkstoffes aufweist, und bei dem die Ware ein Quadrat-Gewebe mit 200 Denier ist.

8. Ein Kompositwerkstoff, wie in einem der Ansprüche 1 bis 5 beansprucht, welcher eine bis zu sechs Lagen des genannten Kompositwerkstoffes aufweist, und bei welchem die Ware ein Quadrat-Gewebe mit 400 Denier ist.

9. Ein Kompositwerkstoff, wie in einem der Ansprüche 1 bis 5 beansprucht, bei welchem die Ware ein Quadrat-Gewebe mit 1200 Denier ist.

**10.** Ein Kompositwerkstoff, aufweisend: a) eine Ware bestehend aus Fasern aus expandiertem porösen Polytetrafluorethylen und aus mindestens einer zusätzlichen kompatiblen Faser, und b) wenigstens ein flexibles Polymer mit einem Biegeelastizitätsmodul geringer als 1400 MPa. wobei (1) der genannte Kompositwerkstoff bei 5 % Reckung einen Modul von geringer als 210 MPa aufweist und bei welchem (2) die Gesamtverformungsarbeit, welche der Kompositwerkstoff vor einem Bruch aushalten kann, größer ist als 450 J/cm der Waren-Matrix (auf das Volumen bezogen).

**11.** Ein Kompositwerkstoff, wie in einem der vorhergehenden Ansprüche beansprucht, bei welchem der Werkstoff ein Diaphragma ist.

**12.** Ein Verfahren zum Herstellen des Kompositwerkstoffs gemäß Anspruch 1, bei welchem die Komposit-Struktur durch Kombinieren der Ware und des flexiblen Polymeres zubereitet wird.

**13.** Ein Verfahren, wie in Anspruch 12 beansprucht, bei welchem die Komposit-Struktur durch Kombinieren der Ware und des flexiblen Polymeres durch einen Schritt zubereitet wird, der ausgewählt wird aus Druck-Laminieren, Preß-Formen, Autoklav-Formen, Roto-Formen, Warmwalz-Laminieren oder Vakuum-Formen.

## Revendications

**1.** Matériau composite comprenant au moins une couche:
(a) d'un tissu comprenant des fibres de polytétrafluoroéthylène poreux expansé; et
(b) d'au moins un polymère souple, ayant un module d'élasticité en flexion, inférieur à 1400 MPa, le rapport volumique du polymère souple au tissu, étant de 5-95 % à 95-5 %, ce matériau composite (1) ayant un module inférieur à 170 MPa pour une contrainte de 5%, et (2) pouvant supporter, avant rupture, une quantité totale de travail supérieure à 670 J/cm de matrice de tissu (en volume).

**2.** Matériau composite selon la revendication 1, dans lequel le polymère souple est un élastomère thermodurcissable.

**3.** Matériau composite selon la revendication 1, dans lequel le polymère souple est un élastomère thermoplastique.

**4.** Matériau composite selon la revendication 1, dans lequel le polymère souple est un polymère thermoplastique.

**5.** Matériau composite selon l'une quelconque des revendications précédentes, dans lequel le tissu est choisi parmi les tissus tissés, tricotés, tressés ou enroulés.

**6.** Matériau composite selon l'une quelconque des revendications précédentes, comprenant de 1 à 4 couches dudit matériau composite, et dans lequel le tissu est un tissu tissé en carré de 50 deniers.

**7.** Matériau composite selon l'une quelconque des revendications 1 à 5, comprenant de 1 à 6 couches dudit matériau composite, et dans lequel le tissu est un tissu tissé en carré de 200 deniers.

**8.** Matériau composite selon l'une quelconque des revendications 1 à 5, comprenant de 1 à 6 couches dudit matériau composite, et dans lequel le tissu est un tissu tissé en carré de 400 deniers.

**9.** Matériau composite selon l'une quelconque des revendications 1 à 5, dans lequel le tissu est un tissu tissé en carré de 1200 deniers.

**10.** Matériau composite comprenant (a) un tissu comprenant une fibre de polytétrafluoroéthylène poreux expansé et au moins une fibre compatible supplémentaire, et (b) au moins un polymère souple, ayant un module d'élasticité en flexion, inférieur à 1400 MPa, ce matériau composite (1) ayant un module inférieur à 210 MPa pour une contrainte de 5%, et (2) pouvant supporter, avant rupture, une quantité totale de travail supérieure à 450 J/cm de matrice de tissu (en volume).

**11.** Matériau composite selon l'une quelconque des revendications précédentes, consistant en un diaphragme.

**12.** Procédé de fabrication du matériau composite de la revendication 1, selon lequel la structure composite est préparée en combinant le tissu et le polymère souple.

**13.** Procédé selon la revendication 12, dans lequel la structure composite est préparée en combinant le tissu et le polymère souple en mettant en oeuvre une opération choisie parmi une stratification sous pression, un moulage sous pression, un moulage en autoclave, un moulage par rotation, une stratification par cylindre chaud ou un façonnage sous vide.

EP 0 536 289 B1

Fig. IA

Fig. IB

21

GLASS FABRIC

ELONGATION %

60
50
40
30
20
10
0

0    445   890   1334  1779 2224 2669   3114  3558 4003 4448

STRENGTH, NEWTONS

Fig. IC

ARAMID FABRIC

ELONGATION %

60
50
40
30
20
10
0

0    890   1779   2669 3558 4448 5332   6227  7117  8006 8896

STRENGTH, NEWTONS

Fig. ID

## Fig. 2

# Fig. 3

Fig. 4

Fig. 5

Fig. 6

Fig. 7